# EUROPÄISCHE PATENTSCHRIFT

(11) **EP 2 623 796 B1**
(45) Veröffentlichungstag und Bekanntmachung des Hinweises auf die Patenterteilung: **13.06.2018**
(21) Anmeldenummer: 13150237.9
(22) Anmeldetag: 04.01.2013
(51) Int. Cl.: F15B 13/04, F15B 13/042

(54) **Ventilbaugruppe mit Vorsteuerpumpe**
Valve assembly with pilot pump
Composant de soupape avec pompe de précommande

(30) Priorität: 02.02.2012 DE 102012001954
(43) Veröffentlichungstag der Anmeldung: 07.08.2013
(73) Patentinhaber: ROBERT BOSCH GMBH, 70442 Stuttgart (DE)
(72) Erfinder: Amrhein, Jan, 71254 Ditzingen (DE)
(74) Vertreter: Maiß, Harald

(56) Entgegenhaltungen:
- JP-A- 2000 337 304
- US-A- 4 779 836

## Beschreibung

Die Erfindung betrifft eine Ventilbaugruppe gemäß dem Oberbegriff von Anspruch 1.

Aus der US 4,779,836 ist eine Ventilbaugruppe bekannt. Gemäß der Fig. 1 der US 4,779,836 umfasst die Ventilbaugruppe ein Gehäuse 1, in dem ein Ventilkolben 13 linearbeweglich aufgenommen ist. An dem Gehäuse sind ein erster und ein zweiter Arbeitsanschluss 2; 3 vorgesehen, welche über einen Ventilsitz am Gehäuse miteinander verbunden sind. Der Ventilsitz kann von dem Ventilkolben mit einer ersten Stirnfläche verschlossen werden, wobei die gegenüberliegende zweite Stirnfläche des Ventilkolbens zusammen mit dem Gehäuse einen Ventilraum 17 begrenzt. Zwischen dem Gehäuse und dem Ventilkolben ist eine verstellbare Drossel vorgesehen, deren Drosselquerschnitt sich bei einer Verschiebung des Ventilkolbens stetig ändert. Hierfür sind an der kreiszylindrischen Außenumfangsfläche des Ventilkolbens in Richtung der Zylinderachse verlaufende Kerben vorgesehen, deren Tiefe sich kontinuierlich ändert. Die Kerben sind so ausgelegt, dass, wenn der Ventilkolben den Ventilsitz dicht verschließt, ein Restdrosselquerschnitt verbleibt, so dass immer eine Fluidverbindung zwischen dem ersten Arbeitsanschluss und dem Ventilraum vorhanden ist, welche über die Drossel miteinander verbunden sind.

Im stationären Zustand der Ventilbaugruppe stellt sich die Lage des Ventilkolbens so ein, dass die Kraft, welche der Druck im Ventilraum auf die zweite Stirnfläche ausübt, gleich der Kraft ist, welche die Drücke am ersten und am zweiten Arbeitsanschluss auf die erste Stirnfläche ausüben. Der Druck am ersten Arbeitsanschluss wirkt dabei auf eine zentrale Kreisfläche, während der Druck am zweiten Arbeitsanschluss auf eine umgebende Kreisringfläche wirkt. Die Kreisfläche und die Kreisringfläche werden durch den Ventilsitz gegeneinander abgegrenzt.

Der Druck im Ventilraum ergibt sich aus dem Druck am ersten Arbeitsanschluss vermindert um den Druckabfall an der Drossel. Der Druckabfall an der Drossel ergibt sich aus dem Volumenstrom, welcher über die Drossel fließt. Dieser Volumenstrom ist gleich dem Steuervolumenstrom, der aus dem Ventilraum über das Vorsteuerventil 26 zum zweiten Arbeitsanschluss fließt. Der veränderliche Drosselquerschnitt, der im Wesentlichen proportional zur Verschiebung des Ventilkolbens zunimmt, bewirkt, dass der genannte Steuervolumenstrom proportional zum Hauptvolumenstrom ist, der vom ersten zum zweiten Arbeitsanschluss fließt. Da der Steuervolumenstrom deutlich kleiner als der Hauptvolumenstrom ist, ist die vorliegende Ventilbaugruppe ein Volumenstromverstärker. Der Vollständigkeit halber sei noch auf die Rückschlagventile 21; 22; 27; 28 hingewiesen, die es ermöglichen, die Ventilbaugruppe auch mit entgegen gesetzter Hauptstromrichtung, also vom zweiten zum ersten Arbeitsanschluss, zu betreiben.

Häufig wird das Vorsteuerventil 26 elektrisch angesteuert, wobei ein Betriebsverhalten der Ventilbaugruppe gewünscht ist, bei der der Hauptvolumenstrom allein vom Ansteuersignal des Vorsteuerventils abhängt, so dass man einen Volumenstromsteller erhält. Dies ist allerdings nur näherungsweise der Fall, da der Steuervolumenstrom außer von der Stellung des Vorsteuerventils auch von dem Druckabfall am Vorsteuerventil abhängt, der wiederum vom Druck am ersten Arbeitsanschluss abhängt. Diese Abhängigkeit kann über Drucksensoren kompensiert werden, welche sehr genau ausgeführt sein müssen und damit teuer sind.

Die Aufgabe der Erfindung besteht darin, eine Ventilbaugruppe bereitzustellen, welche kostengünstiger ausgeführt werden kann. Diese soll elektrisch ansteuerbar sein, wobei der Hauptvolumenstrom, welcher vom ersten zum zweiten Arbeitsanschluss fließt, im Wesentlichen ausschließlich von dem entsprechenden elektrischen Ansteuersignal abhängt, so dass eine Kompensation über Drucksensoren nicht erforderlich ist. Gemäß dem selbständigen Anspruch wird diese Aufgabe dadurch gelöst, dass eine Verdrängerpumpe vorgesehen ist, welche Hydraulikfluid von einem ersten zu einem zweiten Fluidanschluss fördern kann, wobei der erste Fluidanschluss mit dem Ventilraum verbunden ist, wobei die Verdrängerpumpe von einem Elektromotor angetrieben wird. Der Steuervolumenstrom ergibt sich damit aus dem Verdrängungsvolumen der Verdrängerpumpe und deren Antriebsdrehzahl. Die Antriebsdrehzahl der Verdrängerpumpe kann wiederum über den Elektromotor allein über ein elektrisches Ansteuersignal eingestellt werden.

In den abhängigen Ansprüchen sind vorteilhafte Weiterbildungen und Verbesserungen der Erfindung angegeben.

Die Verdrängerpumpe kann eine Zahnradpumpe, vorzugsweise eine Außenzahnradpumpe sein. Zahnradpumpen, insbesondere Außenzahnradpumpen sind besonders kostengünstig. Darüber hinaus können mit solchen Pumpen die für die vorliegende Anwendung erforderlichen kleinen Volumenströme mit hoher Genauigkeit gefördert werden.

Der Elektromotor kann von einer Drehzahlsteuereinrichtung angesteuert werden, die zumindest den Motorstrom einstellen kann. Obgleich Verdrängerpumpen bekannt sind, bei denen der Volumenstrom allein von der Antriebsdrehzahl abhängt, ist dies bei der bevorzugten Außenzahnradpumpe nur näherungsweise der Fall. Hier kommt es zu Leckageströmen, die wiederum von der Druckdifferenz abhängen, gegen die gefördert wird. Die genannte Druckdifferenz schlägt sich aber wiederum im Drehmoment nieder, welches zum Antrieb der Verdrängerpumpe benötigt wird. Dieses Antriebsdrehmoment lässt sich nun ohne Weiteres aus dem Motorstrom ableiten, welcher der Drehzahlsteuereinrichtung bekannt ist. Damit kann allein aus der Drehzahl des Elektromotors und dessen Motorstrom auf den Hauptvolumenstrom geschlossen werden, der vom ersten zum zweiten Arbeitsanschluss fließt.

Das Verdrängungsvolumen der Verdrängerpumpe beträgt vorzugsweise zwischen 0,5 cm³ pro Umdrehung und 10,0 cm³ pro Umdrehung. Verdrängerpumpen, insbesondere Außenzahnradpumpen mit dem vorgeschlagenen Verdrängungsvolumen können besonders kostengünstig hergestellt werden. Das Verhältnis zwischen Steuer- und Hauptvolumenstrom kann durch geeignete Gestaltung des Gehäuses und des Ventilkolbens so eingestellt werden, dass die vorgeschlagenen Verdrängerpumpen eingesetzt werden können.

Die Verdrängerpumpe kann mit einer Druckwaage in Reihe geschaltet sein, die so an den ersten und den zweiten Fluidanschluss angeschlossen ist, dass sie die Druckdifferenz zwischen dem ersten und dem zweiten Fluidanschluss auf einen vorbestimmten Wert einregeln kann. Eine Druckwaage umfasst eine stetig verstellbare Drossel, deren Drosselquerschnitt von einem Ventilschieber verstellt werden kann. Diese verstellbare Drossel ist in Reihe mit der Verdrängerpumpe geschaltet. Der Ventilschieber der Druckwaage wird vorzugsweise von einer Feder in die geschlossene Stellung gedrückt, wobei an der Federseite des Ventilschiebers der Druck am ersten Fluidanschluss anliegt, wobei an der gegenüberliegenden Seite des Ventilschiebers der Druck am zweiten Fluidanschluss anliegt. Durch diese Maßnahme wird der Druckabfall an der Verdrängerpumpe nahezu konstant gehalten. Es verbleibt allenfalls eine geringe Druckschwankung, welche von dem Steuervolumenstrom abhängt, der über die Druckwaage fließt. Damit ist auch bei der bevorzugten Außenzahnradpumpe der Steuervolumenstrom nahezu ausschließlich von deren Antriebsdrehzahl abhängig. Der verbleibende Fehler ist einzig von dem bekannten Betriebsverhalten der Druckwaage abhängig, die sich wiederum im Antriebsdrehmoment des Elektromotors und damit im Motorstrom niederschlägt. Auf das komplizierte Leckageverhalten der Außenzahnradpumpe kommt es nicht mehr an.

Der erste und der zweite Arbeitsanschluss kann an ein Wechselventil angeschlossen sein, welches wiederum an die Drossel angeschlossen ist, wobei der zweite Fluidanschluss der Verdrängerpumpe wenigstens mittelbar mit einem Tank verbindbar ist. Damit wird erreicht, dass der Hauptvolumenstrom sowohl vom ersten zum zweiten Arbeitsanschluss als auch vom zweiten zum ersten Arbeitsanschluss fließen kann. Die Verbindung des zweiten Fluidanschlusses zum Tank kann unmittelbar aber auch mittelbar über den ersten oder den zweiten Arbeitsanschluss erfolgen.

Bei einer Ventilanordnung mit einer ersten und einer zweiten Ventilbaugruppe kann eine einzige Verdrängerpumpe mit zwei Förderrichtungen vorgesehen sein, wobei der erste und der zweite Fluidanschluss der Verdrängerpumpe jeweils über ein Tankrückschlagventil wenigstens mittelbar mit einem Tank verbindbar sind, wobei die beiden Tankrückschlagventile so eingebaut sind, dass Hydraulikfluid nur von der Verdrängerpumpe zum genannten Tank fließen kann. Hierdurch ist es möglich, mit einer einzigen Verdrängerpumpe zwei Ventilbaugruppen zu betreiben, so dass Kosten eingespart werden können. Die beiden Ventilbaugruppen können dabei nicht gleichzeitig sondern nur nacheinander betrieben werden.

Zwischen dem Ventilraum der ersten Ventilbaugruppe und dem ersten Fluidanschluss der Verdrängerpumpe kann eine erste Druckwaage geschaltet sein, wobei zwischen dem Ventilraum der zweiten Ventilbaugruppe und dem zweiten Fluidanschluss der Verdrängerpumpe eine zweite Druckwaage geschaltet ist. Damit können die bereits angesprochenen Vorteile der Druckwaage auch für die Ausführungsform mit einer einzigen Verdrängerpumpe für zwei Ventilbaugruppen nutzbar gemacht werden.

Die Erfindung wird im Folgenden anhand der beigefügten Zeichnungen näher erläutert. Es stellt dar:
- Fig. 1: eine grobschematische Ansicht einer erfindungsgemäßen Ventilbaugruppe; und
- Fig. 2: eine grobschematische Ansicht einer erfindungsgemäßen Ventilanordnung mit zwei Ventilbaugruppen.

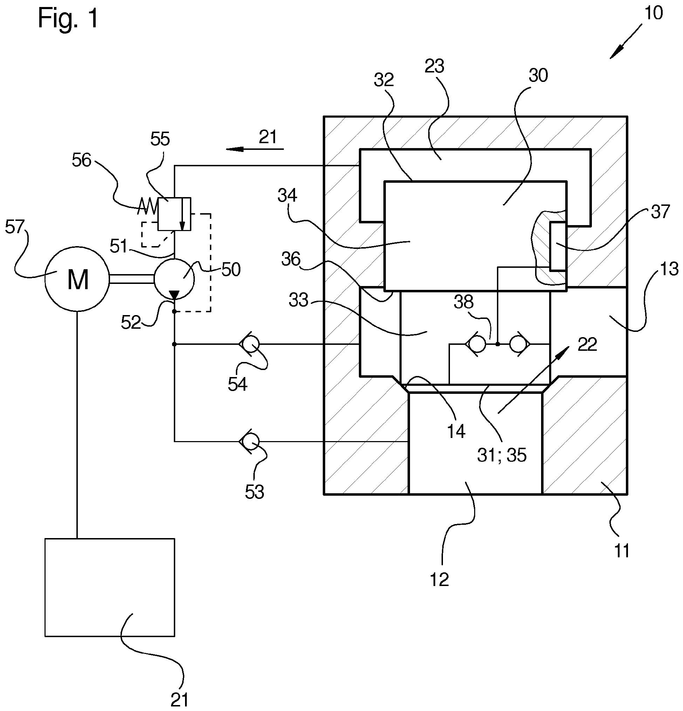

Fig. 1 zeigt eine grobschematische Ansicht einer erfindungsgemäßen Ventilbaugruppe 10. Die Ventilbaugruppe 10 umfasst ein Gehäuse 11, in dem ein Ventilkolben 30 linearbeweglich aufgenommen ist. Der Ventilkolben 30 ist im Wesentlichen in Form eines Stufenzylinders mit einem ersten und einem zweiten kreiszylindrischen Abschnitt 33; 34 ausgeführt. An dem Gehäuse 11 ist ein Ventilsitz 14 vorgesehen, der zur Anlage mit der ersten Stirnfläche 31 des Ventilkolbens 30 am ersten zylindrischen Abschnitt 33 bestimmt ist, so dass der Ventilsitz 14 durch den Ventilkolben 30 dicht verschlossen werden kann. An dem Gehäuse sind ein erster und ein zweiter Arbeitsanschluss 12; 13 vorgesehen, welche über den Ventilsitz 14 miteinander verbunden sind. Die vorliegende Ventilbaugruppe 10 ist dazu bestimmt, einen Hauptvolumenstrom 22 einzustellen, der wahlweise vom ersten zum zweiten Arbeitsanschluss oder umgekehrt fließt.

Der Druck am ersten Arbeitsanschluss 12 wirkt auf die Kreisfläche 35 am ersten zylindrischen Abschnitt 33, welcher den kleineren Durchmesser der beiden zylindrischen Abschnitte 33; 34 aufweist. Der Druck am zweiten Arbeitsanschluss 13 wirkt hingegen auf die Kreisringfläche 36 am Übergang zwischen dem ersten und dem zweiten zylindrischen Abschnitt 33; 34. Die beiden genannten Drücke sind über ein Wechselventil 38 mit einer stetig verstellbaren Drossel 37 verbunden, so dass der jeweils höhere Druck an der Drossel 37 anliegt.

Die stetig verstellbare Drossel 37 wird von mehreren in Richtung der Zylinderachse verlaufenden Schlitzen bzw. Kerben 37 an der Außenumfangsfläche des zweiten zylindrischen Abschnitts 34 gebildet. Die genannten Schlitze 37 sind so angeordnet, dass ein Restdrosselquerschnitt zwischen dem Ventilkolben 30 und dem Gehäuse 11 verbleibt, wenn der Ventilkolben 30 den Ventilsitz 14 dicht verschließt. Wird nun der Ventilkolben 30 in Fig. 1 nach oben verschoben, um den Ventilsitz 14 freizugeben, so erweitert sich der Drosselquerschnitt im Wesentlichen proportional zur Verschiebung des Ventilkolbens 30. Gleiches trifft auf den Öffnungsquerschnitt am Ventilsitz 14 zu.

Die der ersten Stirnfläche 31 gegenüberliegende zweite Stirnfläche 32 begrenzt zusammen mit dem Gehäuse 11 einen Ventilraum 23. Über eine Verdrängerpumpe 50 kann das über die Drossel 37 in den Ventilraum 23 fließende Hydraulikfluid abgesaugt werden, wobei der über die Drossel 37 fließende Steuervolumenstrom gleich dem über die Verdrängerpumpe 50 fließenden Volumenstrom ist. In dem Zustand, in dem sich der Ventilkolben 30 auf eine Stellung eingestellt hat, in dem die an ihm angreifenden Kräfte im Gleichgewicht sind, ist der Hauptvolumenstrom 22 proportional zum Steuervolumenstrom 21.

Die Verdrängerpumpe 50 ist mit einer Druckwaage 55 in Reihe geschaltet. Im vorliegenden Ausführungsbeispiel ist die Druckwaage am ersten Fluidanschluss 52 an der Saugseite der Verdrängerpumpe 50 angeordnet, wobei sie genau so gut am zweiten Fluidanschluss 52 an der Druckseite angeordnet sein kann. Die Druckwaage 55 umfasst einen Ventilschieber, mit dem eine Drossel stetig verstellt werden kann, wobei die Drossel der Druckwaage 55 in Reihe mit der Verdrängerpumpe 50 geschaltet ist. Der Ventilschieber wird von einer Feder 56 in die geschlossene Stellung gedrückt. An der Federseite des Ventilschiebers liegt der niedrigere Druck am ersten Fluidanschluss 51 der Verdrängerpumpe 50 an, wobei an der gegenüberliegenden Seite des Ventilschiebers der höhere Druck am zweien Fluidanschluss 52 der Verdrängerpumpe 50 anliegt. Die Druckwaage 55 ist also ein Proportionalregler, welcher den Druckunterschied zwischen dem ersten und dem zweiten Fluidanschluss 51; 52 auf einen vorgegebenen Wert einregelt, welcher dem Druckäquivalent der Federvorspannkraft entspricht. Dabei ist die Druckwaage 55 umso weiter geöffnet, je größer der Steuervolumenstrom 21 ist. Hierdurch wird die Feder 56 entsprechend deren Steifigkeit etwas weiter gespannt, so dass in der Folge auch die Druckdifferenz an der Verdrängerpumpe 50 gegenüber dem Sollwert etwas ansteigt.

Die Verdrängerpumpe 50 wird von einem Elektromotor 57 angetrieben, der wiederum an eine Drehzahlsteuereinrichtung 20 angeschlossen ist. Bei dem Elektromotor 57 kann es sich um einen konventionellen Gleichstrommotor mit Bürsten oder aber um einen bürstenlosen Gleichstrommotor bzw. einen Synchronmotor handeln. In allen Fällen verstellt die Drehzahlsteuereinrichtung 20 den zum Elektromotor fließenden Motorstrom so lange, bis die gewünschte Drehzahl des Elektromotors 57 erreicht ist. Dabei kann die Drehzahlsteuereinrichtung 20 mit einem Drehzahlsensor verbunden sein, welcher die Drehzahl des Elektromotors 57 ermittelt, so dass eine Drehzahlregelung stattfindet. Insbesondere im Falle eines bürstenlosen Gleichstrommotors kann aber auch eine reine Drehzahlsteuerung gegeben sein, bei der sich die Motordrehzahl aus der Umschaltfrequenz der verschiedenen Motorphasen ergibt.

Der zweite Fluidanschluss 52 der Verdrängerpumpe 50 ist über ein erstes Rückschlagventil 53 mit dem ersten Arbeitsanschluss 12 und über ein zweites Rückschlagventil 54 mit dem zweiten Arbeitsanschluss 13 verbunden. Die beiden Rückschlagventile 53; 54 sind so eingebaut, dass sie nur einen Fluidstrom von der Verdrängerpumpe 57 zum zugeordneten Arbeitsanschluss 12; 13 zulassen. Einer der beiden Arbeitsanschlüsse 12; 13 ist wenigstens mittelbar mit einem Tank einer übergeordneten hydraulischen Schaltung verbunden, so dass der Steuervolumenstrom 21 letztendlich in den Tank abfließen kann.

Bei der Verdrängerpumpe 50 handelt es sich vorzugsweise um eine Außenzahnradpumpe mit einem Verdrängungsvolumen zwischen 0,5 cm³ pro Umdrehung und 10,0 cm³ pro Umdrehung. Wegen der durch die Druckwaage 55 im Wesentlichen konstant eingestellten Druckdifferenz an der Außenzahnradpumpe 50 ist deren Förderstrom im Wesentlichen nur von deren Drehzahl abhängig, welche durch die Drehzahlsteuereinrichtung eingestellt werden kann. Verbleibende kleine Abhängigkeiten vom Steuervolumenstrom können durch Auswertung des Motorstroms ausgeglichen werden. Der Motorstrom bzw. das Antriebsdrehmoment ändert sich proportional zur leicht mit dem Steuervolumenstrom ansteigenden Druckdifferenz an der Verdrängerpumpe 50. In der Folge sind in der Drehzahlsteuereinrichtung 20 alle Messgrößen bekannt, welche zur Einstellung eines bestimmten Hauptvolumenstroms 22 benötigt werden. Damit kann allein durch elektrische Ansteuerung der Drehzahlsteuereinrichtung 20 ein bestimmter Hauptvolumenstrom 22 an der Ventilbaugruppe 10 eingestellt werden. Gesonderte Drucksensoren sind hierfür nicht erforderlich.

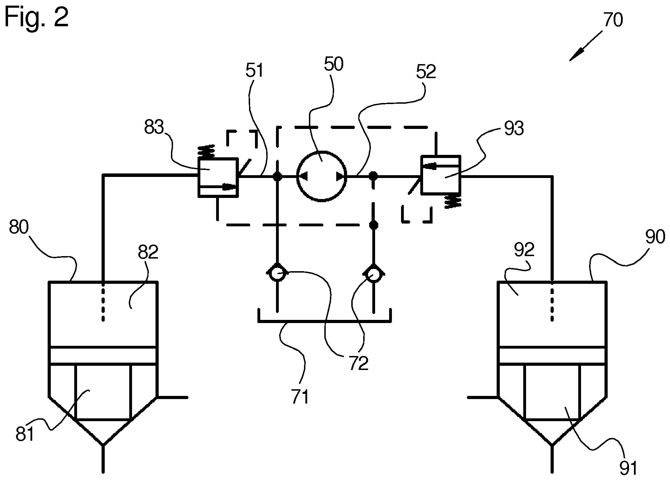

Fig. 2 zeigt eine grobschematische Ansicht einer erfindungsgemäßen Ventilanordnung 70 mit zwei Ventilbaugruppen. Dabei ist ein erstes Gehäuse 80 mit einem ersten Ventilkolben 81 und ein zweites Gehäuse 90 mit einem zweiten Ventilkolben 91 vorgesehen, die jeweils nur symbolartig dargestellt sind, wobei sie entsprechend der Fig. 1 ausgeführt sein können. Der erste Ventilraum 82 des ersten Gehäuses 80 ist über eine erste Druckwaage 83 mit dem ersten Fluidanschluss 51 einer einzigen Verdrängerpumpe 50 verbunden. Der zweite Ventilraum 92 des zweiten Gehäuses 90 ist über eine zweite Druckwaage 55 mit dem zweiten Fluidanschluss 52 der genannten Verdrängerpumpe 50 verbunden. Der erste und der zweite Fluidanschluss 51; 52 sind jeweils über ein Tankrückschlagventil 72 mit einem Tank 71 verbunden, wobei die Tankrückschlagventile 72 so eingebaut sind, dass sie nur einen Fluidstrom vom zugeordneten Fluidanschluss 51; 52 zum Tank 71 zulassen. Der Ventilschieber der ersten Druckwaage 82 ist federseitig mit dem ersten Fluidanschluss 51 und federgegenseitig mit dem zweiten Fluidanschluss 52 verbunden. Der Ventilschieber der zweiten Druckwaage 93 ist federseitig mit dem zweiten Fluidanschluss 52 und federgegenseitig mit dem ersten Fluidanschluss 51 verbunden.

Die Verdrängerpumpe 50, welche vorzugsweise in Form einer Außenzahnradpumpe ausgeführt ist, kann je nach Antriebsdrehrichtung in zwei Richtungen fördern, nämlich vom ersten Ventilraum 82 zum Tank 71 und vom zweiten Ventilraum 92 zum Tank 71. Je nach Förderrichtung wird diejenige Ventilbaugruppe angesteuert, aus deren Ventilraum 82; 92 Hydraulikfluid abgesaugt wird. Die Druckwaage 83; 93 der jeweils anderen Ventilbaugruppe wird von den Drücken am ersten und zweiten Fluidanschluss 51; 52 der Verdrängerpumpe 50 in die geschlossene Stellung gedrückt, so dass der zugeordnete Ventilsitz vom zugeordneten Ventilkolben 81; 91 dicht verschlossen wird.

### Bezugszeichenliste

- 10: Ventilbaugruppe
- 11: Gehäuse
- 12: erster Arbeitsanschluss
- 13: zweiter Arbeitsanschluss
- 14: Ventilsitz

- 20: Drehzahlsteuereinrichtung
- 21: Steuervolumenstrom
- 22: Hauptvolumenstrom
- 23: Ventilraum

- 30: Ventilkolben
- 31: erste Stirnfläche
- 32: zweite Stirnfläche
- 33: erster zylindrischer Abschnitt
- 34: zweiter zylindrischer Abschnitt
- 35: Kreisfläche
- 36: Kreisringfläche
- 37: Drossel bzw. Schlitz
- 38: Wechselventil

- 50: Verdrängerpumpe
- 51: erster Fluidanschluss
- 52: zweiter Fluidanschluss
- 53: erstes Rückschlagventil
- 54: zweites Rückschlagventil
- 55: Druckwaage
- 56: Feder
- 57: Elektromotor
- 70: Ventilanordnung
- 71: Tank
- 72: Tankrückschlagventil

- 80: erstes Gehäuse
- 81: erster Ventilkolben
- 82: erster Ventilraum
- 83: erste Druckwaage

- 90: zweites Gehäuse
- 91: zweiter Ventilkolben
- 92: zweiter Ventilraum
- 93: zweite Druckwaage

## Patentansprüche

1. Ventilbaugruppe (10) mit einem Gehäuse, in dem ein Ventilkolben (30) linearbeweglich aufgenommen ist, wobei an dem Gehäuse (11) ein erster und ein zweiter Arbeitsanschluss (12; 13) vorgesehen sind, welche über einen Ventilsitz (14) am Gehäuse (11) miteinander verbunden sind, wobei der Ventilsitz (14) von dem Ventilkolben (30) mit einer ersten Stirnfläche (31) verschlossen werden kann, wobei die gegenüberliegende zweite Stirnfläche (32) des Ventilkolbens (30) zusammen mit dem Gehäuse (11) einen Ventilraum (23) begrenzt, wobei zwischen dem Gehäuse (11) und dem Ventilkolben (30) eine verstellbare Drossel (37) vorgesehen ist, deren Drosselquerschnitt sich bei Verschiebung des Ventilkolbens (30) stetig ändert, wobei der erste Arbeitsanschluss (12) über die Drossel (37) mit dem Ventilraum (23) verbunden ist,
**dadurch gekennzeichnet, dass** eine Verdrängerpumpe (50) vorgesehen ist, welche Hydraulikfluid von einem ersten zu einem zweiten Fluidanschluss (51; 52) fördern kann, wobei der erste Fluidanschluss (51) mit dem Ventilraum (23) verbunden ist, wobei die Verdrängerpumpe (50) von einem Elektromotor (57) angetrieben wird.

2. Ventilbaugruppe nach Anspruch 1,
**dadurch gekennzeichnet, dass** die Verdrängerpumpe (50) eine Zahnradpumpe, vorzugsweise eine Außenzahnradpumpe ist.

3. Ventilbaugruppe nach einem der vorstehenden Ansprüche,
**dadurch gekennzeichnet, dass** der Elektromotor (57) von einer Drehzahlsteuereinrichtung (20) angesteuert wird, die zumindest den Motorstrom einstellen kann.

4. Ventilbaugruppe nach einem der vorstehenden Ansprüche,
**dadurch gekennzeichnet, dass** das Verdrängungsvolumen der Verdrängerpumpe (50) zwischen 0,5 cm³ pro Umdrehung und 10,0 cm³ pro Umdrehung beträgt.

5. Ventilbaugruppe nach einem der vorstehenden Ansprüche,
**dadurch gekennzeichnet, dass** die Verdrängerpumpe (50) mit einer Druckwaage (55) in Reihe geschaltet ist, die so an den ersten und den zweiten Fluidanschluss (51; 52) angeschlossen ist, dass sie die Druckdifferenz zwischen dem ersten und dem zweiten Fluidanschluss (51; 52) auf einen vorbestimmten Wert einregeln kann.

6. Ventilbaugruppe nach einem der vorstehenden Ansprüche,
**dadurch gekennzeichnet, dass** der erste und der zweite Arbeitsanschluss (12; 13) an ein Wechselventil (38) angeschlossen sind, welches wiederum an die Drossel (37) angeschlossen ist, wobei der zweite Fluidanschluss (52) der Verdrängerpumpe (50) wenigstens mittelbar mit einem Tank verbindbar ist.

7. Ventilanordnung (70) mit einer ersten und einer zweiten Ventilbaugruppe nach einem der vorstehenden Ansprüche,
**dadurch gekennzeichnet, dass** eine einzige Verdrängerpumpe (50) mit zwei Förderrichtungen vorgesehen ist, wobei der erste und der zweite Fluidanschluss (51; 52) der Verdrängerpumpe (50) jeweils über ein Tankrückschlagventil (72) wenigstens mittelbar mit einem Tank (71) verbindbar sind, wobei die beiden Tankrückschlagventile (72) so eingebaut sind, dass Hydraulikfluid nur von der Verdrängerpumpe (50) zum genannten Tank (71) fließen kann.

8. Ventilanordnung nach Anspruch 7 rückbezogen auf Anspruch 5,
**dadurch gekennzeichnet, dass** zwischen dem Ventilraum (82) der ersten Ventilbaugruppe und dem ersten Fluidanschluss (51) der Verdrängerpumpe (50) eine erste Druckwaage (83) geschaltet ist, wobei zwischen dem Ventilraum (92) der zweiten Ventilbaugruppe und dem zweiten Fluidanschluss (52) der Verdrängerpumpe (50) eine zweite Druckwaage (93) geschaltet ist.

## Claims

1. Valve assembly (10) having a housing in which a valve piston (30) is received so as to be linearly movable, wherein, on the housing (11), there are provided a first and a second working port (12; 13) which are connected to one another via a valve seat (14) on the housing (11), wherein the valve seat (14) is able to be closed off by the valve piston (30) by way of a first end face (31), wherein the opposite second end face (32) of the valve piston (30) delimits, together with the housing (11), a valve chamber (23), wherein, between the housing (11) and the valve piston (30), there is provided an adjustable throttle (37) whose throttle cross section changes continuously during displacement of the valve piston (30), wherein the first working port (12) is connected to the valve chamber (23) via the throttle (37),
**characterized in that** a positive displacement pump (50) which is able to deliver hydraulic fluid from a first to a second fluid port (51; 52) is provided, wherein the first fluid port (51) is connected to the valve chamber (23), wherein the positive displacement pump (50) is driven by an electric motor (57).

2. Valve assembly according to Claim 1,
**characterized in that** the positive displacement pump (50) is a toothed-gear pump, preferably an external toothed-gear pump.

3. Valve assembly according to either of the preceding claims,
**characterized in that** the electric motor (57) is activated by a rotational speed control device (20) which is able to set at least the motor current.

4. Valve assembly according to one of the preceding claims,
**characterized in that** the displacement volume of the positive displacement pump (50) is between 0.5 cm³ per revolution and 10.0 cm³ per revolution.

5. Valve assembly according to one of the preceding claims,
**characterized in that** the positive displacement pump (50) is connected in series with a pressure balance (55) which is connected to the first and the second fluid ports (51; 52) such that it is able to adjust the pressure difference between the first and the second fluid ports (51; 52) to a predetermined value.

6. Valve assembly according to one of the preceding claims,
**characterized in that** the first and the second working ports (12; 13) are connected to a shuttle valve (38) which is in turn connected to the throttle (37), wherein the second fluid port (52) of the positive displacement pump (50) is able to be connected at least indirectly to a tank.

7. Valve arrangement (70) having a first and a second valve assembly according to one of the preceding claims,
**characterized in that** a single positive displacement pump (50) with two delivery directions is provided, wherein the first and the second fluid ports (51; 52) of the positive displacement pump (50) are able to be connected in each case via a tank check valve (72) at least indirectly to a tank (71), wherein the two tank check valves (72) are installed such that hydraulic fluid can flow only from the positive displacement pump (50) to said tank (71).

8. Valve arrangement according to Claim 7, referring back to Claim 5,
**characterized in that** a first pressure balance (83) is connected between the valve chamber (82) of the first valve assembly and the first fluid port (51) of the positive displacement pump (50), wherein a second pressure balance (93) is connected between the valve chamber (92) of the second valve assembly and the second fluid port (52) of the positive displacement pump (50).

## Revendications

1. Module de soupape (10) comprenant un boîtier dans lequel un piston de soupape (30) est reçu de manière déplaçable linéairement, un premier et un deuxième raccord de travail (12 ; 13) étant prévus au niveau du boîtier (11), lesquels sont connectés l'un à l'autre par le biais d'un siège de soupape (14) au niveau du boîtier (11), le siège de soupape (14) pouvant être fermé par le piston de soupape (30) avec une première surface frontale (31), la deuxième surface frontale opposée (32) du piston de soupape (30) limitant l'espace de soupape (23) conjointement avec le boîtier (11), entre le boîtier (11) et le piston de soupape (30) étant prévu un étranglement réglable (37) dont la section transversale d'étranglement varie de manière constante lors du déplacement du piston de soupape (30), le premier raccord de travail (12) étant connecté par le biais de l'étranglement (37) à l'espace de soupape (23), **caractérisé en ce qu'**une pompe volumétrique (50) est prévue, laquelle peut refouler du fluide hydraulique depuis un premier raccord de fluide jusqu'à un deuxième raccord de fluide (51 ; 52), le premier raccord de fluide (51) étant connecté à l'espace de soupape (23), la pompe volumétrique (50) étant entraînée par un moteur électrique (57).

2. Module de soupape selon la revendication 1, **caractérisé en ce que** la pompe volumétrique (50) est une pompe à engrenages, de préférence une pompe à engrenages extérieurs.

3. Module de soupape selon l'une quelconque des revendications précédentes,
**caractérisé en ce que** le moteur électrique (57) est commandé par un dispositif de commande de régime (20) qui peut ajuster au moins le courant du moteur.

4. Module de soupape selon l'une quelconque des revendications précédentes,
**caractérisé en ce que** le volume refoulé par la pompe volumétrique (50) est compris entre 0,5 cm³ par tour et 10,0 cm³ par tour.

5. Module de soupape selon l'une quelconque des revendications précédentes,
**caractérisé en ce que** la pompe volumétrique (50) est montée en série avec une balance manométrique (55) qui est raccordée au premier et au deuxième raccord de fluide (51 ; 52) de telle sorte qu'elle puisse ajuster la différence de pression entre le premier et le deuxième raccord de fluide (51 ; 52) à une valeur prédéterminée.

6. Module de soupape selon l'une quelconque des revendications précédentes,
**caractérisé en ce que** le premier et le deuxième raccord de travail (12 ; 13) sont raccordés à une soupape d'échange (38) qui est à son tour raccordée à l'étranglement (37), le deuxième raccord de fluide (52) de la pompe volumétrique (50) pouvant être connecté au moins de manière indirecte à un réservoir.

7. Agencement de soupape (70) comprenant un premier et un deuxième module de soupape selon l'une quelconque des revendications précédentes,
**caractérisé en ce qu'**une pompe volumétrique unique (50) est pourvue de deux sens de refoulement, le premier et le deuxième raccord de fluide (51 ; 52) de la pompe volumétrique (50) pouvant être chacun connectés par le biais d'un clapet antiretour de réservoir (72) à un réservoir (71) au moins de manière indirecte, les deux clapets antiretour de réservoir (72) étant installés de telle sorte que le fluide hydraulique puisse s'écouler seulement depuis la pompe volumétrique (50) jusqu'audit réservoir (71).

8. Agencement de soupape selon la revendication 7 lorsqu'elle se rapporte à la revendication 5, **caractérisé en ce qu'**une première balance manométrique (83) est montée entre l'espace de soupape (82) du premier module de soupape et le premier raccord de fluide (51) de la pompe volumétrique (50), une deuxième balance manométrique (93) étant montée entre l'espace de soupape (92) du deuxième module de soupape et le deuxième raccord de fluide (52) de la pompe volumétrique (50).
